# EUROPÄISCHE PATENTANMELDUNG

(11) **EP 1 542 304 A2**
(43) Veröffentlichungstag der Anmeldung: **15.06.2005**
(21) Anmeldenummer: 04029377.1
(22) Anmeldetag: 10.12.2004
(51) Int. Cl.: H01M 8/04, H01M 8/06

(54) **Bestimmung des Lambdawertes von Reformat**

(30) Priorität: 12.12.2003 DE 10358933
(71) Anmelder: Webasto AG, 82131 Stockdorf (DE)
(72) Erfinder: Käding, Stefan, 17309 Zerrenthin (DE); Reinert, Andreas, 17033 Neubrandenburg (DE)

(57) **Zusammenfassung**

Die Erfindung betrifft ein Verfahren zur Bestimmung des Lambdawertes (λᵢₛₜ) von Reformat (10), das dazu vorgesehen ist, einem Brennstoffzellenstack (12) zugeführt zu werden, wobei zur Bestimmung des Lambdawertes (λᵢₛₜ) die Spannung an zumindest einem Brennstoffzellenelement (14) ausgewertet wird.

Erfindungsgemäß ist vorgesehen, dass die ausgewertete Spannung an dem zumindest einen Brennstoffzellenelement (14) die Leerlaufspannung (U₀) des zumindest einen Brennstoffzellenelements (14) ist.

Weiterhin betrifft die Erfindung ein Verfahren zur Lambdaregelung eines Reformers, eine Vorrichtung zur Bestimmung des Lambdawertes sowie ein System (32) umfassend einen Reformer (16) zur Umsetzung von zumindest Brennstoff (20) und Luft (22) zu Reformat (10) und einen von dem Reformer (16) mit Reformat (10) gespeisten Brennstoffzellenstack (12), wobei der Reformer (16) lambdageregelt ist.

## Beschreibung

Die Erfindung betrifft ein Verfahren zur Bestimmung des Lambdawertes von Reformat, das dazu vorgesehen ist, einem Brennstoffzellenstack zugeführt zu werden, wobei zur Bestimmung des Lambdawertes die Spannung an zumindest einem Brennstoffzellenelement ausgewertet wird.

Weiterhin betrifft die Erfindung ein Verfahren zur Lambdaregelung eines Reformers zur Umsetzung von zumindest Brennstoff und Luft zu Reformat, das dazu vorgesehen ist, einem Brennstoffzellenstack zugeführt zu werden.

Die Erfindung betrifft auch eine Vorrichtung zur Bestimmung des Lambdawertes von Reformat, das dazu vorgesehen ist, einem Brennstoffzellenstack zugeführt zu werden, wobei die Vorrichtung Mittel aufweist, die zur Bestimmung des Lambdawertes die Spannung an zumindest einem Brennstoffzellenelement auswerten können.

Darüber hinaus betrifft die Erfindung ein System umfassend einen Reformer zur Umsetzung von zumindest Brennstoff und Luft zu Reformat und einen von dem Reformer mit Reformat gespeisten Brennstoffzellenstack, wobei der Reformer Lambdageregelt ist.

Die gattungsgemäßen Verfahren, Vorrichtungen und Systeme werden im Zusammenhang mit der Umwandlung von chemischer Energie in elektrische Energie eingesetzt. Zu diesem Zweck werden dem Reformer Brennstoff und Luft, vorzugsweise in Form eines Brennstoff/Luft-Gemisches, zugeführt. In dem Reformer erfolgt dann eine Umsetzung des Brennstoffes mit dem Luftsauerstoff, wobei vorzugsweise das Verfahren der partiellen Oxidation durchgeführt wird.

Das so erzeugte Reformat wird dann einer Brennstoffzelle beziehungsweise einem Brennstoffzellenstack zugeführt, wobei durch die kontrollierte Umsetzung von Wasserstoff, als Bestandteil des Reformats, und Sauerstoff elektrische Energie freigesetzt wird.

Der Reformer kann, wie bereits erwähnt, so ausgelegt sein, dass das Verfahren der partiellen Oxidation durchgeführt wird, um Reformat zu erzeugen. In diesem Fall ist es bei der Verwendung von Diesel als Brennstoff besonders nützlich, vor der partiellen Oxidation Vorreaktionen durchzuführen. Auf diese Weise können mit "kalter Flamme" langkettige Dieselmoleküle in kürzerkettige Moleküle umgesetzt werden, was letztlich den Reformerbetrieb begünstigt. Allgemein wird der Reaktionszone des Reformers ein Gasgemisch zugeführt, welches zu H₂ und CO umgesetzt wird. Ein weiterer Bestandteil des Reformats sind N₂ aus der Luft sowie, in Abhängigkeit von der Luftzahl und der Temperatur, gegebenenfalls CO₂, H₂O und CH₄. Im Normalbetrieb wird der Brennstoffmassenstrom entsprechend der angeforderten Leistung geregelt, und der Luftmassenstrom wird auf einen Lambdawert beziehungsweise eine Luftzahl im Bereich von λ = 0,4 geregelt. Die Reformierungsreaktion kann durch unterschiedliche Sensoren, beispielsweise Temperatursensoren und Gassensoren, überwacht werden.

Neben dem Verfahren der partiellen Oxidation ist es ebenfalls möglich, eine autotherme Reformierung durchzuführen. Das Verfahren der partiellen Oxidation wird im Gegensatz zur autothermen Reformierung dadurch herbeigeführt, dass Sauerstoff unterstöchiometrisch zugeführt wird. Beispielsweise hat das Gemisch eine Luftzahl von λ = 0,4. Die partielle Oxidation ist exotherm, so dass es in problematischer Weise zu einer unerwünschten Aufheizung des Reformers kommen kann. Ferner neigt die partielle Oxidation zu einer verstärkten Rußbildung. Zur Vermeidung der Rußbildung kann die Luftzahl λ größer gewählt und/oder ein Teil des für die Oxidation verwendeten Sauerstoffs durch Wasserdampf bereitgestellt werden. Da die Oxidation mit Wasserdampf endotherm verläuft, ist es möglich, das Verhältnis zwischen Brennstoff, Sauerstoff und Wasserdampf so einzustellen, dass insgesamt weder Wärme freigesetzt noch Wärme verbraucht wird. Die so erreichte autotherme Reformierung beseitigt daher die Probleme der Rußbildung und einer unerwünschten Überhitzung des Reformers.

Ebenfalls ist es möglich, dass im Anschluss an die Oxidation in dem Reformer weitere Schritte der Gasbehandlung erfolgen, wobei insbesondere der partiellen Oxidation eine Methanisierung nachgeschaltet sein kann.

Ein gängiges Brennstoffzellensystem ist beispielsweise ein PEM-System ("proton exchange membrane"), welches typischerweise bei Betriebstemperaturen zwischen Raumtemperatur und etwa 100 °C betrieben werden kann. Aufgrund der niedrigen Betriebstemperaturen wird dieser Brennstoffzellentyp häufig für mobile Anwendungen genutzt, beispielsweise in Kraftfahrzeugen.

Weiterhin sind Hochtemperaturbrennstoffzellen bekannt, sogenannte SOFC-Systeme ("solid oxide fuel cell"). Diese Systeme arbeiten beispielsweise im Temperaturbereich von zirka 800 °C, wobei ein Feststoffelektrolyt ("solid oxide") in der Lage ist, den Transport von Sauerstoffionen zu übernehmen. Der Vorteil von derartigen Hochtemperaturbrennstoffzellen gegenüber PEM-Systemen besteht insbesondere in der Robustheit gegenüber mechanischen und chemischen Belastungen.

Als Anwendungsgebiet für Brennstoffzellen in Verbindung mit den gattungsgemäßen Systemen kommen neben stationären Anwendungen insbesondere Anwendungen im Kraftfahrzeugbereich in Frage, beispielsweise als "auxiliary power unit" (APU).

Zur Bestimmung des Lambdawertes von Reformat wird beim Stand der Technik häufig ein im Ausgangsbereich des Reformers vorgesehener Sensor (Lambdasonde) verwendet, um die Sauerstoffkonzentration zu messen. Dies stellt einen zusätzlichen materiellen Aufwand dar, der mit hohen Kosten verbunden ist.

Weiterhin können Dichtigkeitsprobleme und/oder Temperaturprobleme auftreten.

Aus der WO 03/094278 A1 sind die gattungsgemäßen Verfahren, Vorrichtungen und Systeme bekannt, bei denen auf eine separate Lambdasonde verzichtet werden kann. Gemäß der Lehre dieser Druckschrift wird über die Ausgangsspannung an einem oder an mehreren Brennstoffzellenelementen auf den Lambdawert geschlossen. Zu diesem Zweck werden für unterschiedliche Betriebszustände gemessene Wertepaare aus Ausgangsspannung und Lambdawert gespeichert. Das messtechnische Erfassen dieser Wertepaare ist jedoch aufwendig und mit hohen Kosten verbunden.

Der Erfindung liegt die Aufgabe zugrunde, die gattungsgemäßen Verfahren, Vorrichtungen und Systeme derart weiterzubilden, dass der Lambdawert in kostengünstiger Weise bestimmt werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das erfindungsgemäße Verfahren zur Bestimmung des Lambdawertes baut auf dem gattungsgemäßen Stand der Technik dadurch auf, dass die ausgewertete Spannung an dem zumindest einen Brennstoffzellenelement die Leerlaufspannung des zumindest einen Brennstoffzellenelements ist. Die Leerlaufspannung ist weniger stark von den momentanen Betriebsbedingungen abhängig, als die Spannung an einem Brennstoffzellenelement, dem Strom entnommen wird. Sofern die Ermittlung des Lambdawertes bei dem erfindungsgemäßen Verfahren über gespeicherte Wertepaare aus Leerlaufspannung und zugehörigem Lambdawert erfolgt, ist eine im Vergleich zum Stand der Technik geringere Anzahl von Wertepaaren ausreichend, so dass der messtechnische Aufwand und der Aufwand zur Speicherung der Wertepaare verringert wird. Vorzugsweise erfolgt die Bestimmung des Lambdawertes bei dem erfindungsgemäßen Verfahren jedoch nicht über gespeicherte Wertepaare sondern rechnerisch, was durch die Verwendung der Leerlaufspannung als Funktionsvariable ebenfalls möglich ist.

In diesem Fall wird für das erfindungsgemäße Verfahren zur Bestimmung des Lambdawertes bevorzugt, dass über die Nernstsche Gleichung auf den Lambdawert geschlossen wird. Dies ist möglich, da die Leerlaufspannung des stromlos betriebenen Brennstoffzellenelements der Nernstschen Gleichung folgt.

Das erfindungsgemäße Verfahren zur Lambdaregelung eines Reformers baut auf dem gattungsgemäßen Stand der Technik dadurch auf, dass die Lambdaregelung auf der Grundlage von Lambdawerten durchgeführt wird, die mit dem erfindungsgemäßen Verfahren zur Bestimmung des Lambdawertes bestimmt werden. Auch in diesem Fall wird der zur Bestimmung der Lambdawerte erforderliche Aufwand im Vergleich zum Stand der Technik deutlich verringert.

Die erfindungsgemäße Vorrichtung zur Bestimmung des Lambdawertes baut auf dem gattungsgemäßen Stand der Technik dadurch auf, dass die Mittel zur Bestimmung des Lambdawertes die Leerlaufspannung des zumindest einen Brennstoffzellenelements auswerten können. Die zur Bestimmung des Lambdawertes vorgesehenen Mittel können dabei durch dem Fachmann bekannte analoge oder digitale Schaltungen realisiert werden, insbesondere durch Hardware, die mit geeigneter Software zusammenwirkt.

Auch im Falle der erfindungsgemäßen Vorrichtung wird bevorzugt, dass die Mittel über die Nernstsche Gleichung auf den Lambdawert schließen. Die Ermittlung des Lambdawertes kann dabei durch direkte Auswertung der Nernstschen Gleichung, über geeignete Kennfelder oder irgendeine andere geeignete, für den Fachmann naheliegende Weise erfolgen.

Das erfindungsgemäße System baut auf dem gattungsgemäßen Stand der Technik dadurch auf, dass es zur Durchführung der Lambdaregelung die erfindungsgemäße Vorrichtung zur Bestimmung des Lambdawertes umfasst.

Ein wesentlicher Grundgedanke der Erfindung liegt darin, dass der stromlose Betrieb von zumindest einem Brennstoffzellenelement eines eine Mehrzahl von Brennstoffzellenelementen aufweisenden Brennstoffzellenstacks eine zuverlässige und kostengünstige Bestimmung des Lambdawertes von Reformat ermöglicht.

Bevorzugte Ausführungsformen der Erfindung werden nachfolgend anhand der zugehörigen Zeichnungen beispielhaft erläutert.

Es zeigen:
- Figur 1: ein Flussdiagramm, das eine Ausführungsform der erfindungsgemäßen Verfahren veranschaulicht; und
- Figur 2: ein Blockschaltbild, das eine Ausführungsform der erfindungsgemäßen Vorrichtung und des erfindungsgemäßen Systems veranschaulicht.

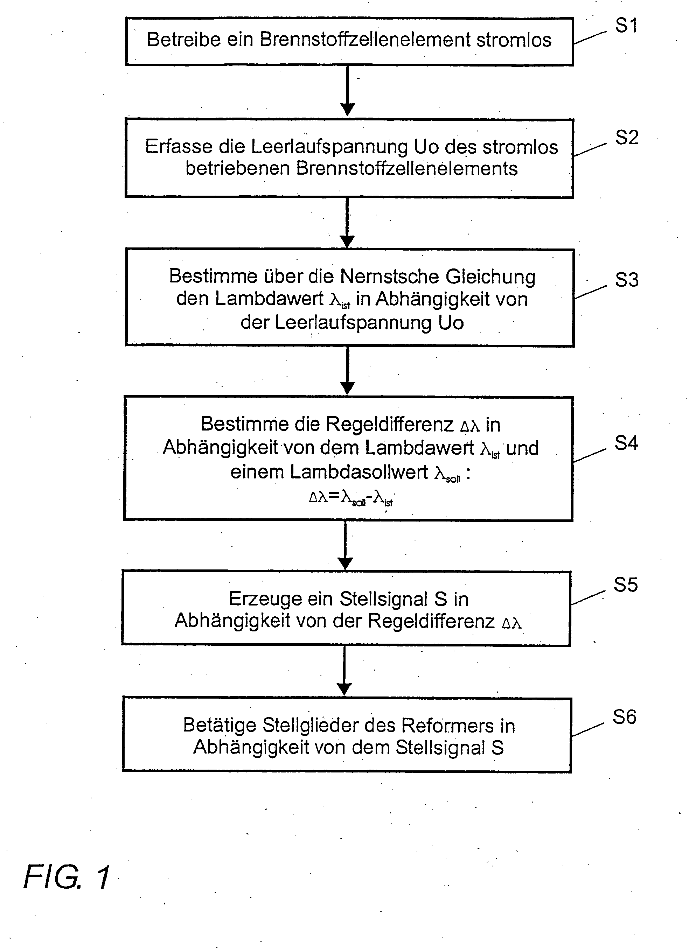

Die in Figur 1 dargestellten Schritte S1 bis S3 veranschaulichen eine Ausführungsform des erfindungsgemäßen Verfahrens zur Bestimmung des Lambdawertes, während die Schritte S1 bis S6 eine Ausführungsform des erfindungsgemäßen Verfahrens zur Lambdaregelung eines Reformers zeigen.

Gemäß dem dargestellten Schritt S1 wird ein Brennstoffzellenelement eines eine Mehrzahl von Brennstoffzellenelementen aufweisenden Brennstoffzellenstacks stromlos betrieben, wobei selbstverständlich auch Ausführungsformen denkbar sind, bei denen mehr als nur ein Brennstoffzellenelement stromlos betrieben wird.

Im Schritt S2 wird die Leerlaufspannung U₀ des stromlos betriebenen Brennstoffzellenelements erfasst. Dies kann über irgendwelche dem Fachmann geläufige Einrichtungen erfolgen, die analog und/oder digital arbeiten.

Im Schritt S3 wird ,über die Nernstsche Gleichung der Lambdawert λᵢₛₜ in Abhängigkeit von der Leerlaufspannung U₀ bestimmt. Dies ist möglich, da die Leerlaufspannung U₀ eines stromlos betriebenen Brennstoffzellenelements der Nernstschen Gleichung folgt.

Im Schritt S4 wird die Regeldifferenz Δλ in Abhängigkeit von dem Lambdawert λᵢₛₜ und einem Lambdasollwert λₛₒₗₗ ermittelt, über den Zusammenhang Δλ = Δₛₒₗₗ - Δᵢₛₜ.

Anschließend wird im Schritt S5 ein Stellsignal S in Abhängigkeit von der Regeldifferenz Δλ erzeugt.

Im Schritt S6 wird zumindest ein Stellglied in Abhängigkeit von dem Stellsignal S betätigt. Ein oder mehrere Stellglieder können dabei insbesondere dem Reformer zugeordnet sein und beispielsweise die Luft- und oder Brennstoffzufuhr variieren. Sofern mehrere Stellglieder vorgesehen sind, enthält das Stellsignal S vorzugsweise eine Mehrzahl von Informationen, die zur jeweiligen Ansteuerung eines Stellgliedes geeignet sind.

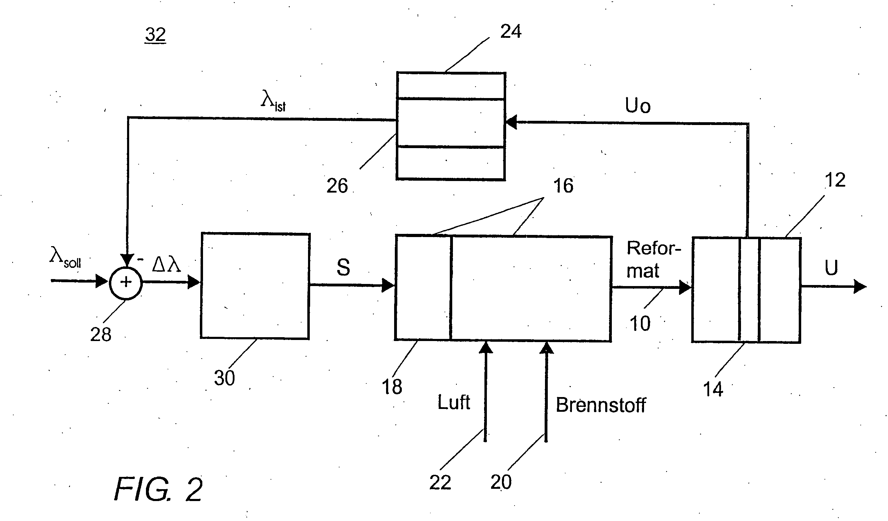

Figur 2 zeigt ein Blockschaltbild, das sowohl eine Ausführungsform der erfindungsgemäßen Vorrichtung als auch eine Ausführungsform des erfindungsgemäßen Systems veranschaulicht. Die erfindungsgemäße Vorrichtung 24, die durch dem Fachmann geläufige Hard- und/oder Software realisiert werden kann, ist zur Bestimmung des Lambdawertes λᵢₛₜ von Reformat 10 vorgesehen. Das Reformat 10 wird von einem Reformer 16 erzeugt und einem Brennstoffzellenstack 12 zugeführt. Der Brennstoffzellenstack 12 umfasst eine Vielzahl von Brennstoffzellenelementen, von denen im dargestellten Fall ein Brennstoffzellelement 14 stromlos betrieben wird, so dass dieses Brennstoffzellelement 14 eine Leerlaufspannung U₀ liefert. Die erfindungsgemäße Vorrichtung 24 umfasst Mittel 26, die zur Bestimmung des Lambawertes λᵢₛₜ die Leerlaufspannung U₀ des Brennstoffzellenelements 14 auswerten. Die Mittel 26 bestimmen den Lambdawert λᵢₛₜ vorzugsweise über die Nemstsche Gleichung.

Die erfindungsgemäße Vorrichtung 24 ist Bestandteil eines insgesamt mit 32 bezeichneten erfindungsgemäßen Systems, das neben der Vorrichtung 24 weiterhin einen Reformer 16 zur Umsetzung von Brennstoff 20 und Luft 22 zu Reformat 10 und den von dem Reformer 16 mit Reformat 10 gespeisten Brennstoffzellenstack 12 umfasst, der neben der Leerlaufspannung U₀ des Brennstoffzellenelements 14 eine Ausgangsspannung U liefert. Das dargestellte System umfasst weiterhin einen Addierer 28, der aus einem Lambdasollwert λₛₒₗₗ und dem Lambdaistwert λᵢₛₜ eine Regeldifferenz Δλ erzeugt. Diese Regeldifferenz Δλ wird einem ebenfalls dem System 32 zugeordneten Regler 30 zugeführt, der in Abhängigkeit von der Regeldifferenz Δλ ein oder mehrere geeignete Stellsignale S ausgibt. Im dargestellten Fall wird das Stellsignal S einem Stellglied 18 zugeführt, das Bestandteil des Reformers 16 ist. Das Stellglied 18 kann beispielsweise die Zufuhr von Brennstoff 20 und/oder Luft 22 beeinflussen.

Die in der bevorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Reformat
- 12: Brennstoffzellenstack
- 14: stromlos betriebenes Brennstoffzellenelement
- 16: Reformer
- 18: Stellglied
- 20: Brennstoff
- 22: Luft
- 24: Vorrichtung zur Bestimmung des Lambdawertes
- 26: Mittel zur Auswertung der Leerlaufspannung
- 28: Addierer
- 30: Regler
- 32: System

## Patentansprüche

1. Verfahren zur Bestimmung des Lambdawertes (λᵢₛₜ) von Reformat (10), das dazu vorgesehen ist, einem Brennstoffzellenstack (12) zugeführt zu werden, wobei zur Bestimmung des Lambdawertes (λᵢₛₜ) die Spannung an zumindest einem Brennstoffzellenelement (14) ausgewertet wird, **dadurch gekennzeichnet, dass** die ausgewertete Spannung an dem zumindest einen Brennstoffzellenelement (14) die Leerlaufspannung (U₀) des zumindest einen Brennstoffzellenelements (14) ist.

2. Verfahren nach Anspruch 1, **dadurch gekennzeichnet, dass** über die Nernstsche Gleichung auf den Lambdawert (λᵢₛₜ) geschlossen wird.

3. Verfahren zur Lambdaregelung eines Reformers (16) zur Umsetzung von zumindest Brennstoff (20) und Luft (22) zu Reformat (10), das dazu vorgesehen ist, einem Brennstoffzellenstack (12) zugeführt zu werden, **dadurch gekennzeichnet, dass** die Lambdaregelung auf der Grundlage von Lambdawerten (λᵢₛₜ) durchgeführt wird, die mit dem Verfahren nach Anspruch 1 oder 2 bestimmt werden.

4. Vorrichtung (24) zur Bestimmung des Lambdawertes (λᵢₛₜ) von Reformat (10), das dazu vorgesehen ist, einem Brennstoffzellenstack (12) zugeführt zu werden, wobei die Vorrichtung (24) Mittel (26) aufweist, die zur Bestimmung des Lambdawertes (λᵢₛₜ) die Spannung an zumindest einem Brennstoffzellenelement (14) auswerten können, **dadurch gekennzeichnet, dass** die Mittel (26) zur Bestimmung des Lambdawertes (λᵢₛₜ) die Leerlaufspannung (U₀) des zumindest einen Brennstoffzellenelements (14) auswerten können.

5. Vorrichtung (24) nach Anspruch 4, **dadurch gekennzeichnet, dass** die Mittel (26) über die Nernstsche Gleichung auf den Lambdawert (λᵢₛₜ) schließen.

6. System (32) umfassend einen Reformer (16) zur Umsetzung von zumindest Brennstoff (20) und Luft (22) zu Reformat (10) und einen von dem Reformer (16) mit Reformat (10) gespeisten Brennstoffzellenstack (12), wobei der Reformer (16) lambdageregelt ist, **dadurch gekennzeichnet, dass** es zur Durchführung der Lambdaregelung eine Vorrichtung (24) nach Anspruch 4 oder 5 umfasst.
